Europäisches Patentamt

European Patent Office

Office européen des brevets

(19)

(11) **EP 1 144 948 B1**

(12) **FASCICULE DE BREVET EUROPEEN**

(45) Date de publication et mention
de la délivrance du brevet:
**16.02.2005 Bulletin 2005/07**

(21) Numéro de dépôt: **00920829.9**

(22) Date de dépôt: **18.04.2000**

(51) Int Cl.$^7$: **G01C 19/56**

(86) Numéro de dépôt international:
**PCT/FR2000/001005**

(87) Numéro de publication internationale:
**WO 2000/065307 (02.11.2000 Gazette 2000/44)**

(54) **CAPTEUR GYROSCOPIQUE ET APPAREIL DE MESURE DE ROTATION**

OSZILLATIONSKREISELSENSOR UND DREHWINKELMESSGERÄT

GYROSCOPIC SENSOR AND APPARATUS FOR MEASURING ROTATION

(84) Etats contractants désignés:
**DE FR GB IT**

(30) Priorité: **23.04.1999 FR 9905204**

(43) Date de publication de la demande:
**17.10.2001 Bulletin 2001/42**

(73) Titulaire: **SAGEM SA**
**75015 Paris (FR)**

(72) Inventeurs:
• **JEANROY, Alain**
**F-78700 Conflans Sainte Honorine (FR)**

• **LEGER, Pierre**
**F-92130 Issy les Moulineaux (FR)**

(74) Mandataire: **Loisel, Bertrand et al**
**Cabinet Plasseraud**
**65/67 rue de la Victoire**
**75440 Paris Cedex 09 (FR)**

(56) Documents cités:
**EP-A- 0 175 508**

Remarques:
L'OMPI données de publication A3 ne sont pas
actuellement disponibles.

## Description

La présente invention concerne de façon générale les capteurs gyroscopiques ayant un élément mécanique, appelé résonateur, capable de vibrer sur une résonance mécanique, des détecteurs sensibles à une élongation donnée par la vibration au résonateur et des transducteurs d'application de forces au résonateur et plus particulièrement les capteurs gyroscopiques dont le résonateur, en forme de cloche ou de calotte de révolution, est fixé suivant son axe et présente un bord circulaire situé dans un plan perpendiculaire à l'axe, à distance du point de fixation dans le sens axial.

On connaît déjà des capteurs gyroscopiques utilisant un tel résonateur. On trouvera des exemples de réalisation dans le brevet US 4 157 041 (General Motors Corporation) et le brevet US 4 951 508. En général, le résonateur est constitué par une calotte hémisphérique en silice, permettant d'obtenir des facteurs de qualité très élevés, pouvant dépasser $5.10^6$. Les détecteurs, de nature capacitive, sont placés de façon que l'élongation de la vibration du résonateur dans le sens radial modifie la distance inter-électrodes. Les transducteurs destinés à exciter la résonance sont placés pour exercer des forces électrostatiques au moins dans deux directions radiales particulières où l'élongation est détectée par variation de la distance inter-électrodes.

Pour obtenir une efficacité suffisante de la détection et de l'excitation, les entrefers du détecteur et les transducteurs doivent être faibles. Dans la pratique, on place les électrodes fixes des transducteurs et détecteurs sur des pièces sphériques, concaves ou convexes suivant qu'elles sont à l'extérieur ou à l'intérieur du résonateur, ajustées pour définir des entrefers. Il n'est pratiquement pas possible de descendre au-dessous de 100 à 200 $\mu$m.

La réalisation d'un tel capteur est très coûteuse. L'obtention d'entrefers faibles et identiques entre les pièces sphériques exige une précision importante de fabrication et une concentricité précise. Il est beaucoup plus difficile de réaliser des électrodes sur des surfaces sphériques que sur des surfaces planes. Les tracés conducteurs destinés à constituer les liaisons électriques et des électrodes de garde éventuelles autour des électrodes de détecteur et de transducteur sont également difficiles à réaliser, en trois dimensions. Il faut enfin que les coefficients de dilatation thermique du résonateur et de la pièce sphérique qui porte les électrodes fixes soient adaptés.

Toutes ces contraintes ont jusqu'à présent limité l'emploi des capteurs à résonateur en forme de calotte ou de cloche à des applications haut de gamme, pour lesquelles on peut tolérer un coût élevé.

La présente invention vise à fournir un capteur gyroscopique du genre ci-dessus défini, réalisable à un coût beaucoup plus faible que ceux qui existent à ce jour.

Pour arriver à ce résultat, l'invention fait usage d'une constatation négligée jusqu'à présent, à savoir que le bord d'un résonateur en forme de cloche ou de calotte, excité suivant un mode de vibration provoquant une déformation avec des composantes radiales et tangentielles, présente également une composante de déplacement parallèle à l'axe du résonateur. Dans le cas particulier d'un résonateur hémisphérique, on verra que l'amplitude du déplacement axial est égale à la moitié de l'amplitude du déplacement radial.

L'invention propose notamment un capteur ayant :

- un résonateur en forme de cloche ou de calotte de révolution, fixé suivant son axe et présentant un bord circulaire situé dans un plan perpendiculaire à l'axe, à distance du point de fixation du résonateur dans le sens axial,
- et un substrat portant des moyens de détection et d'excitation coopérant avec le résonateur.

caractérisé en ce que les moyens de détection et d'excitation coopèrent avec une composante axiale d'une vibration du résonateur.

Dans un mode avantageux de réalisation, ces moyens comprennent des détecteurs et des transducteurs qui peuvent être placés sur le substrat, qui est orthogonal à l'axe, en face du bord conducteur du résonateur.

Les détecteurs et/ou transducteurs peuvent avoir diverses constitutions connues. Ils peuvent comporter des électrodes coopérant avec le résonateur pour constituer des détecteurs capacitifs et des électrodes coopérant avec le résonateur pour constituer des transducteurs capacitifs d'excitation.

Les moyens de détection et d'excitation peuvent être constitués par les mêmes composants, travaillant en temps partagé ou utilisant une modulation de porteuses à des fréquences différentes. La détection des déplacements en présence du signal d'excitation peut s'effectuer alors par détection synchrone. Par ailleurs, les détecteurs et/ou transducteurs peuvent être de nature autre qu'électrostatique.

Le fond du résonateur est avantageusement fixé sur le substrat par des moyens en un matériau ayant sensiblement le même coefficient de dilatation que le résonateur, de façon à rendre le capteur très peu sensible aux variations de température.

On voit que le capteur suivant l'invention utilise la composante axiale du déplacement du bord du résonateur pour détecter l'amplitude de la vibration aux points de mesure et également pour exciter cette dernière.

Lorsque le résonateur n'est pas hémisphérique, l'amplitude du déplacement axial du bord n'est plus forcément égale à la moitié de l'amplitude radiale. En particulier, l'amplitude des déformations axiales du bord diminue lorsque la profondeur (longueur axiale) du résonateur augmente à partir de la forme hémisphérique.

Dans la pratique, on adoptera un entrefer au repos compris entre 5 μm et 100 μm, généralement entre 5 et 20 μm, c'est-à-dire des valeurs qui peuvent être respectées beaucoup plus facilement dans le cas de surfaces planes en regard que dans le cas de surfaces sphériques. Pour conserver des dimensions acceptables, on utilisera généralement un résonateur ayant une fréquence propre inférieure à 10 kHz. Il est souhaitable de placer le capteur sous vide pour réduire l'amortissement.

Le résonateur peut présenter une épaisseur de paroi constante. Il peut également présenter une épaisseur accrue dans la partie proche du bord, de façon à augmenter la surface efficace des électrodes portées par le substrat. Les électrodes placées sur le substrat présenteront avantageusement une dimension radiale supérieure à celle du bord du résonateur, de façon qu'elles débordent de chaque côté et qu'un léger décentrage soit sans effet sur la mesure.

Les caractéristiques ci-dessus, ainsi que d'autres, apparaîtront mieux à la lecture de la description qui suit de modes particuliers de réalisation, donnés à titre d'exemples non limitatifs. La description se réfère aux dessins qui l'accompagnent, dans lesquels :

- la figure 1 représente schématiquement un résonateur hémisphérique et indique les paramètres qui interviennent dans la vibration.
- la figure 2 montre des formes extrêmes prises lors des vibrations d'ordre 2 d'un résonateur du genre montré en figure 1, les déformations étant très exagérées pour plus de clarté ;
- la figure 2A montre, suivant un plan à 45° de celui de la figure 2, une forme extrême que peut prendre le résonateur ;
- la figure 3 montre un mode de montage possible d'un résonateur sur un substrat ;
- la figure 4 est un schéma en plan montrant une disposition possible des électrodes, des transducteurs et des détecteurs sur le substrat ;
- les figures 5 et 6 sont des schémas montrant des variantes de réalisation du résonateur ; et
- la figure 7 montre schématiquement, en plan, un jeu d'électrodes de condensateur utilisable comme détecteur, à la place des électrodes de la figure 4.

Avant de décrire une constitution matérielle du capteur gyroscopique, il convient de montrer que la déformation d'un résonateur en forme de calotte ou de cloche est complexe, et ne peut être regardée comme conduisant à une oscillation purement radiale et tangentielle du bord.

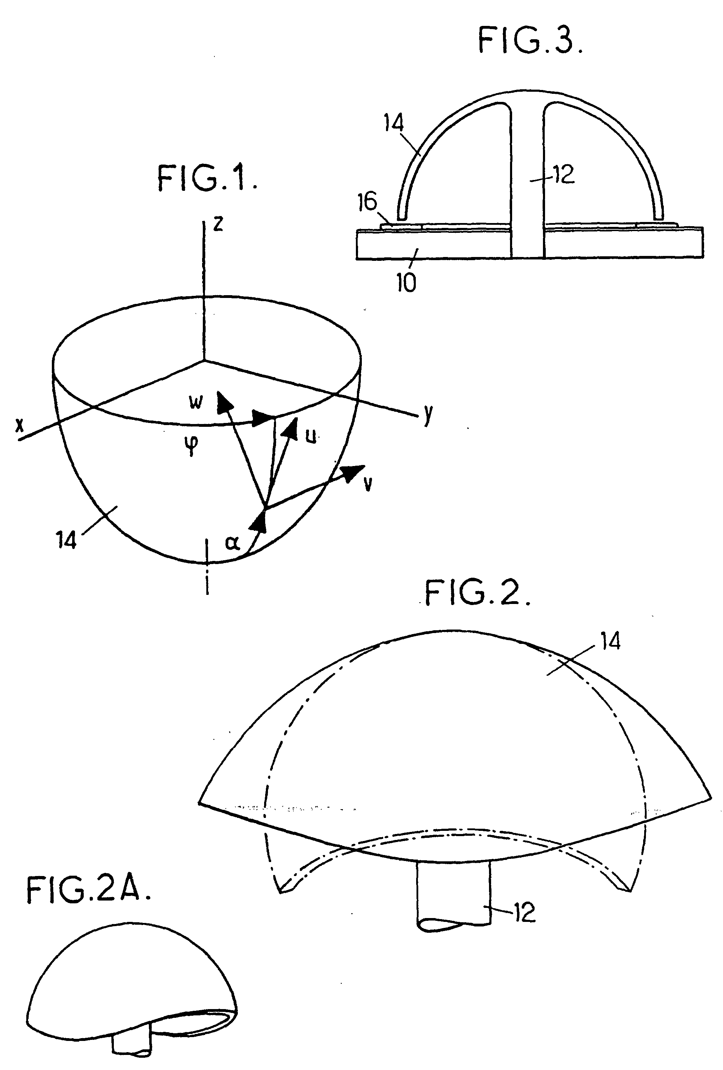

En coordonnées sphériques, et avec les notations montrées sur la figure 1, les équations analytiques pour le mode n = 2 (c'est-à-dire le mode de base) sont les suivantes :

$$u = A \sin\alpha \ tg^2\alpha/2 \ \cos2(\varphi-\varphi_0) \ \sin\omega(t-t_0) + B \sin\alpha \ tg^2\alpha/2 \ \sin2(\varphi-\varphi_0) \ \cos\omega(t-t_0)$$

$$v = A \sin\alpha \ tg^2\alpha/2 \ \sin2(\varphi-\varphi_0) \ \sin\omega(t-t_0) - B \sin\alpha \ tg^2\alpha/2 \ \cos2(\varphi-\varphi_0) \ \cos\omega(t-t_0)$$

$$w = A \ (2 + \cos\alpha) \ tg^2\alpha/2 \ \cos2(\varphi-\varphi_0) \ \sin\omega(t-t_0) + B \ (2 + \cos\alpha) \ tg^2\alpha/2 \ \sin2(\varphi-\varphi_0) \ \cos\omega(t-t_0)$$

A l'équateur, $\alpha$ = 90° et les équations deviennent :

$$u = A \cos2(\varphi-\varphi_0) \ \sin\omega(t-t_0) + B \sin2(\varphi-\varphi_0) \ \cos\omega(t-t_0)$$

$$v = A \sin2(\varphi-\varphi_0) \ \sin\omega(t-t_0) - B \cos2(\varphi-\varphi_0) \ \cos\omega(t-t_0)$$

$$w = A \ 2 \cos2(\varphi-\varphi_0) \ \sin\omega(t-t_0) + B \ 2 \sin2(\varphi-\varphi_0) \ \cos\omega(t-t_0)$$

Dans ces formules, u, v et w désignent l'amplitude du déplacement axial, du déplacement tangentiel et du déplacement radial. $\varphi$ désigne l'azimut.

La figure 2 montre, respectivement en traits pleins et en traits mixtes, des formes successives prises par le résonateur en vibration et fait apparaître l'existence d'un élongation axiale moitié de l'élongation radiale.

A ce jour, c'est le déplacement radial w qui est utilisé. Au contraire, l'invention propose d'utiliser le déplacement axial u. L'amplitude de ce déplacement est égale, dans le cas d'un résonateur hémisphérique, à la moitié de l'amplitude du déplacement radial w, ce qui semble à première vue un défaut.

Mais en réalité, cette diminution de l'amplitude à mesurer est plus que compensée par des caractéristiques très favorables. Du fait que l'entrefer (distance inter-électrodes) est plan, il peut être défini de façon précise, par exemple à l'aide de cales d'épaisseur, lors du montage du résonateur sur un substrat. On peut réduire sans difficulté la valeur de l'entrefer jusqu'à une valeur de 10 à 20 µm, dix fois plus faible que dans le cas d'une architecture classique. L'efficacité des transducteurs et des détecteurs est en première approximation proportionnelle à la surface des électrodes divisée par le carré de l'entrefer. On voit donc l'intérêt de la solution proposée, qui permet de diminuer notablement l'entrefer. Comme la valeur de l'entrefer intervient par son carré, la diminution de l'entrefer permet de compenser, et au-delà, la plus faible surface active des électrodes.

Le capteur représenté dans la figure 3 comporte un substrat 10 auquel est fixé, par une tige 12, le résonateur 14. Afin que la dimension de l'entrefer varie peu en température, il est préférable de constituer la tige support 12 du même matériau que le résonateur ou d'un matériau ayant un coefficient de dilatation thermique voisin.

On peut constituer le résonateur en silice, ce qui permet d'obtenir des coefficients de surtension élevés, avec un revêtement métallique conducteur. Ce revêtement métallique peut être limité à un anneau recouvrant le bord du résonateur et à des pistes métallisées de mise à un potentiel de référence, qui peut être un potentiel constant (en général la masse) ou un potentiel ajustable. Souvent il sera possible, par un simple traitement de surface chimique de la silice, d'obtenir un degré de qualité de la surface sphérique suffisant pour obtenir une surtension élevée, ce qui écarte l'étape de polissage nécessaire avec la disposition traditionnelle.

Mais, étant donné que le rendement des transducteurs d'excitation est supérieur à celui des montages habituels, on peut également utiliser un résonateur métallique dont le coût de réalisation est plus faible. La tige 12, lorsqu'elle est constituée du même matériau que le résonateur, peut être d'une seule pièce avec ce dernier et être encastrée dans le substrat 10.

Le substrat peut être constitué d'une pièce métallique revêtue d'une pellicule isolante sur laquelle sont disposées les électrodes fixes des transducteurs et des détecteurs dont l'épaisseur est schématisée en 16 sur la figure 3.

Diverses dispositions d'électrodes sont possibles. En règle générale, on placera au moins deux électrodes (ou deux couples d'électrodes opposés) dans des orientations qui sont mutuellement orthogonales dans un référentiel du mode choisi, c'est-à-dire à 45° l'une de l'autre dans le cas de l'ordre 2. De même, on placera les transducteurs d'application de forces dans deux directions mutuellement orthogonales dans ce même référentiel.

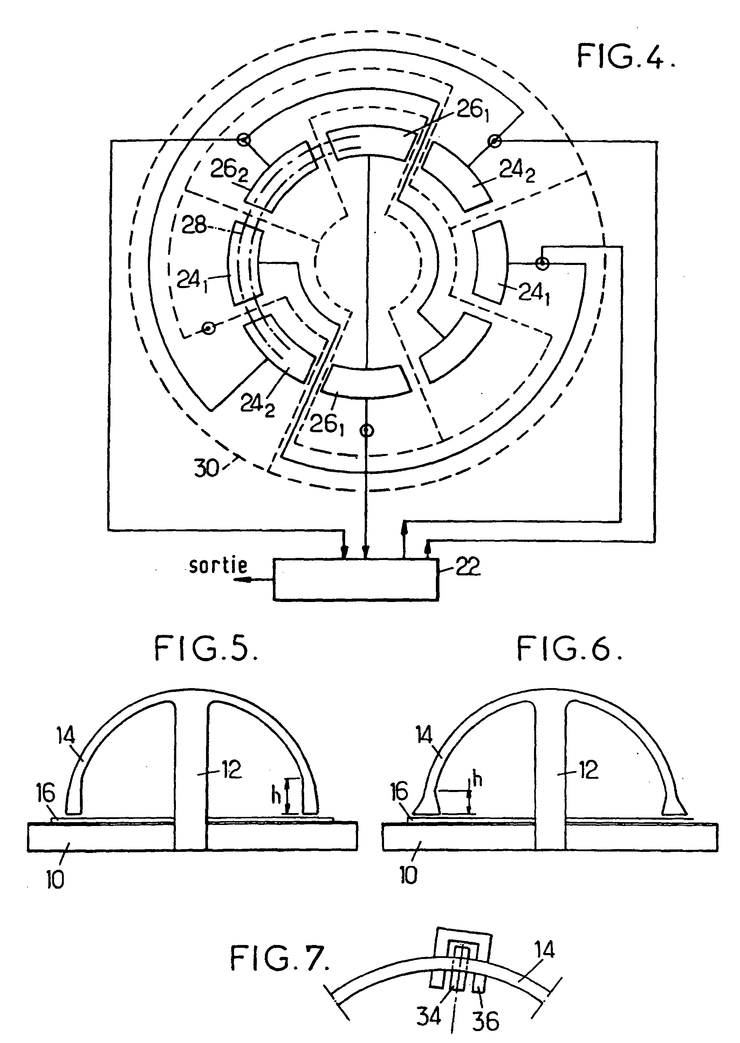

Dans le mode de réalisation de la figure 4, les transducteurs électrostatiques sont définis par deux couples d'électrodes $24_1$ et $24_2$ alignés suivant deux directions à 45° l'une de l'autre, permettant d'entretenir une vibration d'ordre 2. Les détecteurs sont définis par deux couples d'électrodes $26_1$ et $26_2$, également disposés suivant deux directions à 45° l'une de l'autre. Les signaux de sortie prélevés sur les électrodes $26_1$ et $26_2$ sont appliqués à un circuit électronique de calcul et de puissance 22 qui alimente les transducteurs pour maintenir une amplitude de vibration constante et fournit un signal de sortie qui, suivant le cas , sera représentatif d'un angle de rotation ou d'une vitesse.

De façon à tolérer les erreurs de centrage du résonateur par rapport au substrat et éviter toute influence de la composante radiale de vibration sur le signal de sortie, les électrodes 24 et 26 ont une largeur radiale supérieure à l'épaisseur du bord du résonateur 40, schématisée en 28 sur la figure 4.

On voit que toutes les liaisons internes aux capteurs peuvent être réalisées en une seule couche. On voit également qu'il est possible de placer des électrodes de garde 30 suivant le schéma indiqué en tirets de façon à réduire les couplages.

Le circuit électronique de mesure et de commande 22 peut avoir des constitutions très variées. Il peut notamment avoir la constitution décrite dans le document EP-A-0 810 418 pour constituer un gyromètre. Il est également possible d'utiliser l'une des constitutions de circuit décrite dans le document EP 0 578 519 permettant d' obtenir un fonctionnement en gyromètre (mesure de vitesse de rotation) ou en gyroscope (mesure d'angle de rotation).

Le capteur peut, toujours en fonctionnant en mode n = 2, être prévu avec 16 électrodes plutôt que 8. Il est également possible de faire fonctionner le capteur suivant un mode plus élevé que 2, en augmentant le nombre des électrodes, bien que cette modification présente généralement peu d'intérêt.

En général, on choisira les caractéristiques mécaniques du résonateur de façon qu'il ait une fréquence propre comprise entre 3 kHz et 10 kHz, car la performance diminue au-delà de cette dernière valeur. Un résonateur hémisphérique ayant un diamètre compris entre 10 et 50 mm a donné de bons résultats. L'amplitude de la vibration peut être régulée de façon à être dans une plage allant de 0,5 à 1 µm. Le résonateur peut être mis à la masse par l'intermédiaire de son support 12. Cependant, dans d'autres cas il peut être préférable de porter le résonateur à un potentiel différent, fixe ou modulé. Le résonateur sera contenu dans un boîtier (non représenté) dans lequel règne une pression réduite, dans la pratique inférieure à $10^{-3}$ millibar, de façon à réduire l'amortissement gazeux.

Comme on l'a indiqué plus haut, le résonateur peut avoir une forme autre qu'hémisphérique. En particulier, la section du résonateur suivant un plan passant par l'axe peut être en forme de tronçon de parabole ou de tronçon d'ellipse.

Pour augmenter la surface des condensateurs élémentaires formés par les transducteurs et les détecteurs, il est possible de renfler le résonateur à proximité de son bord. La figure 5 montre un résonateur sur lequel ce résultat est atteint en donnant à la surface interne du résonateur une forme cylindrique, sur une longueur h faible par rapport à la profondeur totale du résonateur. Dans le cas de la figure 6, ce résultat est atteint en donnant à la. surface interne et à la surface externe une forme qui s'écarte d'une surface sphérique dans une zone h également faible par rapport à la profondeur du résonateur.

Comme il a été indiqué plus haut, les transducteurs et/ou détecteurs peuvent avoir une constitution différente de celle montrée en figure 4. La figure 7 montre par exemple un capteur constitué de deux électrodes placées sur le substrat 10. L'électrode centrale 34 est en forme de bande radiale. L'autre électrode 36 est en forme de U dont les branches encadrent l'électrode centrale 34. Dans ce cas, la constitution du résonateur est simplifiée, car il n'a pas besoin d'être revêtu d'une couche conductrice. La capacité du condensateur constitué par les électrodes 34 et 36 varie lors des vibrations axiales, du fait que la constante diélectrique du matériau constitutif du résonateur (silice par exemple) est différente de celle de l'atmosphère, généralement à très faible pression, entre le bord du résonateur et les électrodes.

Comme dans le cas de la figure 4, les électrodes 34 et 36 doivent avoir une étendue radiale suffisante pour qu'un léger décentrage du résonateur soit sans effet sur la mesure en dépit de la composante radiale de la vibration du résonateur.

**Revendications**

1.  Capteur gyroscopique comprenant :

    -   un résonateur (14) en forme de cloche ou de calotte de révolution, fixé suivant son axe et présentant un bord circulaire situé dans un plan perpendiculaire à l'axe, à distance du point de fixation du résonateur dans le sens axial,
    -   et un substrat (10) portant des moyens de détection et d'excitation coopérant avec le résonateur,

    **caractérisé en ce que** les moyens de détection et d'excitation coopèrent avec une composante axiale d'une vibration du résonateur.

2.  Capteur selon la revendication 1, **caractérisé en ce que** les dits moyens de détection et d'excitation comprennent des détecteurs et transducteurs ($24_1$, $24_2$, $26_1$, $26_2$) placés sur le substrat, qui est plan et orthogonal à l'axe, en face du bord conducteur du résonateur.

3.  Capteur selon la revendication 2, **caractérisé en ce que** les détecteurs et transducteurs comprennent respectivement des électrodes ($26_1$,$26_2$) coopérant avec le résonateur pour constituer des détecteurs capacitifs et des électrodes ($24_1$,$24_2$) coopérant avec le résonateur pour constituer des transducteurs capacitifs d'excitation.

4.  Capteur selon la revendication 3, **caractérisé en ce que** la distance au repos entre les électrodes et le bord du résonateur est comprise entre 5 µm et 100 µm.

5.  Capteur selon la revendication 3 ou 4, **caractérisé en ce que** les électrodes débordent radialement de part et d'autre du bord du résonateur.

6.  Capteur selon l'une quelconque des revendications 3 à 5, destiné à vibrer en mode d'ordre 2, ayant au moins deux jeux d'électrodes de détection ($26_1$,$26_2$) alignés suivant deux directions à 45° et deux jeux d'électrodes ($24_1$,$24_2$) de transducteurs alignés suivant deux directions à 45° l'une de l'autre.

7.  Capteur suivant l'une quelconque des revendications 3 à 5, **caractérisé en ce que** le résonateur est constitué en métal ou en silice métallisée.

8.  Capteur selon l'une quelconque des revendications 1 à 7, **caractérisé en ce que** le résonateur est fixé au substrat par des moyens constitués d'un matériau ayant sensiblement le même coefficient de dilatation que le résonateur.

9.  Capteur selon l'une quelconque des revendications 1 à 8, **caractérisé en ce que** le résonateur est maintenu à un potentiel défini, fixe ou modulé, par l'intermédiaire des moyens de fixation suivant son axe.

10. Appareil de mesure de rotation comprenant un capteur selon l'une quelconque des revendications 3 à 5, et un circuit électronique (22) recevant le signal de sortie fourni par les électrodes des détecteurs et alimentant les électrodes de transducteurs pour entretenir la vibration en créant des forces à la fréquence de résonance du résonateur et des moyens de calcul de la rotation du résonateur autour de son axe à partir d'un traitement des signaux.

## Claims

**1.** A gyroscopic sensor comprising:

- a resonator (14) in the form of a bell or a circularly-symmetrical cap, the resonator being fixed on its axis and presenting a circular edge situated in a plane perpendicular to the axis and at a distance from the fixing point of the resonator in the axial direction; and
- a substrate (10) carrying detection and excitation means for co-operating with the resonator;

the sensor being **characterized in that** the detection and excitation means co-operate with an axial component of resonator vibration.

**2.** A sensor according to claim 1, **characterized in that** said detection and excitation means comprise detectors and transducers ($24_1$, $24_2$, $26_1$, $26_2$) placed on the substrate, which is plane and orthogonal to the axis, and placed facing an electrically conductive edge of the resonator.

**3.** A sensor according to claim 2, **characterized in that** the detectors and transducers respectively comprise electrodes ($26_1$, $26_2$) co-operating with the resonator to constitute capacitive detectors and electrodes ($24_1$, $24_2$) co-operating with the resonator to constitute capacitive excitation transducers.

**4.** A sensor according to claim 3, **characterized in that** the distance at rest between the electrodes and the edge of the resonator lies in the range 5 $\mu$m to 100 $\mu$m.

**5.** A sensor according to claim 3 or 4, **characterized in that** the electrodes extend radially on either side of the edge of the resonator.

**6.** A sensor according to any one of claims 3 to 5, for vibrating in second-order mode, the resonator having at least two sets of detection electrodes ($26_1$, $26_2$) in alignment on two directions at 45° each other, and two sets of transducer electrodes ($24_1$, $24_2$) in alignment on two directions at 45° to each other.

**7.** A sensor according to any one of claims 3 to 5, **characterized in that** the resonator is made of metal or of metal-plated silica.

**8.** A sensor according to any one of claims 1 to 7, **characterized in that** the resonator is fixed to the substrate by means constituted by a material having substantially the same coefficient of expansion as the resonator.

**9.** A sensor according to any one of claims 1 to 8, **characterized in that** the resonator is maintained at a defined potential, which can be fixed or modulated, by means of fixing means on its axis.

**10.** Rotation-measuring apparatus comprising a sensor according to any one of claims 3 to 5, and an electronic circuit (22) receiving the output signal supplied by the detector electrodes and energizing the transducer electrodes to sustain vibration by creating forces at a resonant frequency of the resonator, and means for calculating rotation of a resonator about its axis by processing the signals.

## Patentansprüche

**1.** Kreiselsensor umfassend:

- eine Resonator (14) in Form einer Rotationsglocke oder -kalotte, der längs seiner Achse befestigt ist und einen kreisförmigen Rand aufweist, der in einer lotrecht zur Achse verlaufenden Ebene vom Befestigungspunkt des Resonators axial beabstandet angeordnet ist,

- und ein Substrat (10), das Detektions- und Anregungsmittel trägt, die mit dem Resonator zusammenwirken,

**dadurch gekennzeichnet, dass** die Detektions- und Anregungsmittel mit einer axialen Komponente einer Schwingung des Resonators zusammenwirken.

2. Sensor nach Anspruch 1,
**dadurch gekennzeichnet, dass** die Detektions- und Anregungsmittel Detektoren und Wandler ($24_1$, $24_2$, $26_1$, $26_2$) umfassen, die auf dem ebenen und orthogonal zur Achse verlaufenden Substrat gegenüber dem leitfähigen Rand des Resonators plaziert sind.

3. Sensor nach Anspruch 2,
**dadurch gekennzeichnet, dass** die Detektoren und Wandler jeweils Elektroden ($26_1$, $26_2$) umfassen, die mit dem Resonator zusammenwirken, um kapazitive Detektoren zu bilden, bzw. Elektroden ($24_1$, $24_2$), die mit dem Resonator zusammenwirken, um kapazitive Anregungswandler zu bilden.

4. Sensor nach Anspruch 3,
**dadurch gekennzeichnet, dass** der Abstand zwischen den Elektroden und dem Rand des Resonators im Ruhezustand von 5 µm bis 100 µm liegt.

5. Sensor nach Anspruch 3 oder 4,
**dadurch gekennzeichnet, dass** die Elektroden zu beiden Seiten des Randes des Resonators radial überstehen.

6. Sensor nach einem der Ansprüche 3 bis 5,
der dazu bestimmt ist, im Modus 2 zu schwingen, wobei er wenigstens zwei Sätze Detektionselektroden ($26_1$, $26_2$) besitzt, die in zwei Richtungen mit einem Winkel von 45° zueinander ausgerichtet sind, sowie zwei Sätze Wandlerelektroden ($24_1$, $24_2$), die in zwei Richtungen mit einem Winkel von 45° zueinander ausgerichtet sind.

7. Sensor nach einem der Ansprüche 3 bis 5,
**dadurch gekennzeichnet, dass** der Resonator aus Metall oder mit Metall beschichtetem Silizium gebildet ist.

8. Sensor nach einem der Ansprüche 1 bis 7,
**dadurch gekennzeichnet, dass** der Resonator auf dem Substrat durch Mittel befestigt ist, die aus einem Werkstoff gebildet sind, der im Wesentlichen den gleichen Ausdehnungskoeffizienten wie der Resonator hat.

9. Sensor nach einem der Ansprüche 1 bis 8,
**dadurch gekennzeichnet, dass** der Resonator durch Befestigungsmittel entlang seiner Achse bei einem bestimmten festen oder modulierten Potential gehalten wird.

10. Drehbewegungsmessgerät umfassend einen Sensor nach einem der Ansprüche 3 bis 5 und eine elektronische Schaltung (22), die das von den Elektroden der Detektoren abgegebene Ausgangssignal empfängt und die Wandlerelektroden speist, um die Schwingung aufrechtzuerhalten, wobei Kräfte mit der Resonanzfrequenz des Resonators und Mittel zur Berechnung der Drehbewegung des Resonators um seine Achse ausgehend von einer Signalverarbeitung erzeugt werden.

FIG.3.

FIG.1.

FIG.2.

FIG.2A.

FIG.4.

FIG.5.

FIG.6.

FIG.7.